(19) Europäisches Patentamt
European Patent Office
Office européen des brevets

(11) Publication number: **0 462 588 A2**

## (12) EUROPEAN PATENT APPLICATION

(21) Application number: **91110044.4**

(51) Int. Cl.[5]: **C08F 297/02**

(22) Date of filing: **19.06.91**

(30) Priority: **21.06.90 JP 161198/90**

(43) Date of publication of application: **27.12.91 Bulletin 91/52**

(84) Designated Contracting States: **DE FR GB**

(71) Applicant: **MITSUBISHI PETROCHEMICAL CO., LTD.**
**5-2, Marunouchi 2-chome**
**Chiyoda-ku Tokyo(JP)**

(72) Inventor: **Hirakawa, Katsumi**
**Mitsubishi Petrochemical Co., Ltd., Yokkaichi Res.**
**Center, 1, Toho-cho, Yokkaichi-shi, Mie(JP)**
Inventor: **Takahama, Tomohiko**
**Mitsubishi Petrochemical Co., Ltd., Yokkaichi Res.**
**Center, 1, Toho-cho, Yokkaichi-shi, Mie(JP)**
Inventor: **Goto, Yukitaka**
**Mitsubishi Petrochemical Co., Ltd., Yokkaichi Res.**
**Center, 1, Toho-cho, Yokkaichi-shi, Mie(JP)**

(74) Representative: **Hansen, Bernd, Dr. Dipl.-Chem. et al**
**Hoffmann, Eitle & Partner Patent- und Rechtsanwälte Arabellastrasse 4 Postfach 81 04 20**
**W-8000 München 81(DE)**

## (54) Olefin block copolymer and method of producing same.

(57) An olefin block copolymer comprising the following segment A:

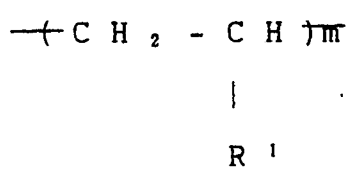

and the following segment B:

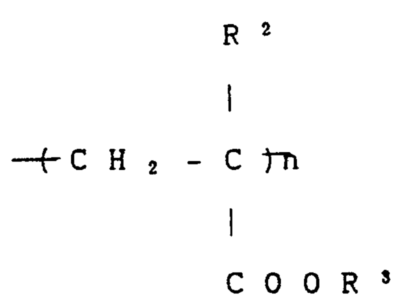

bonded in block, and the Q value of the segment A is at most 3.5, the Q value of the segment B is at most 4.0,

EP 0 462 588 A2

and the amount of the segment B is at least 5 wt%, wherein $R^1$ represents a hydrogen atom or an alkyl group of 1-12 carbon atoms, $R^2$ represents a hydrogen atom or an alkyl group of 1-6 carbon atoms, $R^3$ represents a hydrocarbon residue of 1-18 carbon atoms, m is an integer 70 or more, and n is an integer 50 or more.

This block copolymer is manufactured by the two stages of polymerization of ethylene and acylic acid or the ester thereof using a catalyst comprising a lithium compound containing a cyclopentadienyl group, an alkaline metal compound bearing aklyl or aryl groups, and a halide of a lanthanide series of metal or yttrium.

## BACKGROUND OF THE INVENTION

### 1. Field of the Invention

The present invention relates to a novel olefin block copolymer and to a method of manufacturing the olefin block copolymer using a novel olefin polymerization catalyst.

### 2. Description of the Related Art

Heretofore, as an olefin polymerization catalyst Ziegler type catalysts have been widely known. Ziegler type catalysts, however, have a shorter growth activated terminal life and have difficulty in producing true block copolymers because either $\beta$ -elimination or of transfer to a monomer or co-catalyst easily take place. In addition Ziegler type catalysts are weak in their polar groups and are subject to deactivation of their active points when ethylenic monomers having polar groups are polymerized in two stages.

It has, therefore, been tried to manufacture block copolymers comprising polyolefins and polyacrylates by effectively using their activated terminal groups.

For example, there can be exemplified a method of polymerizing methyl methacrylate by the use of the modification of active points in the second stages after the polymerization of ethylene in the first stage using a Ti family of catalyst (Japanese Patent Laid-open No. 39786/1977), a method of radically polymerizing methyl methacrylate in the second stage after the living polymerization of propylene in the first stage using a V family of catalyst (Makromol. Chem. Vol. 186, No. 1, 11 (1985)), and a method of polymerizing methyl methacrylate in the second stages after the polymerization of ethylene in the first stage using a bivalent of rare earth catalyst (POLYMER PREPRINT, THE SOCIETY OF POLYMER SCIENCE, JAPAN, Vol. 38, No. 6, 1736 (1989)).

Each of the polymers described in this publicly known literature is a deficient in the content or molecular weight of the polyacrylate portion thereof; therefore, the polymers can not be satisfactorily employed for practical applications.

## SUMMARY OF THE INVENTION

The present invention is aimed at providing a novel polyolefin-polyacrylate block copolymer having a large molecular weight and high molecular content in the polyacrylate portion of the copolymer as well as to provide a novel polymerization catalyst comprising a rare earth metal with bulky ligands sterically fixed for the manufacture of said block copolymer.

The present invention relates to an olefin block copolymer characterized in that said copolymer comprises the following segment A

$$-\!\!\left(CH_2-\underset{\displaystyle R^1}{\underset{|}{CH}}\right)_m$$

and the following segment B

$$-\!\!\left(CH_2-\overset{\displaystyle R^2}{\overset{|}{\underset{\displaystyle COOR^3}{\underset{|}{C}}}}\right)_n$$

bonded in block fashion, where the Q value of segment A is 3.5 or less, the Q value of segment B is 4.0 or

less and the B segment is not less than 5 wt%, wherein $R^1$ represents hydrogen atom or an alkyl group of 1-12 carbon atoms, $R^2$ represents hydrogen atom or an alkyl group of 1-6 carbon atoms, $R^3$ represents a hydrocarbon residue of 1-18 carbon atoms, m is an integer of 70 or more, and n is an integer 50.

The present invention also relates to a method of manufacturing the olefin block copolymer characterized in that in the presence of a catalyst comprising the following catalyst constitutes A, B and C, the first polymerization stage is effected using an olefin having a general formula of $CH_2=CHR^1$, wherein $R^1$ is a hydrogen atom or an alkyl group of 1-12 carbon atoms, and the second polymerization stage is conducted using an olefin having a general formula of $CH_2=C(R^2)COOR^3$, wherein $R^2$ is a hydrogen atom or an alkyl group of 1-6 carbon atoms and $R^3$ is a hydrocarbon residue of 1-18 carbon atoms and,

the catalyst constituent A is a substituted or unsubstituted cyclopentadienyl group,

the catalyst constituent B is a substituent which is selected from the group consisting of a hydrogen atom, an alkyl and aryl groups, and

the catalyst constituent C is a trivalent rare earth metal which is selected from the group consisting of the metals of the lanthanide series with atomic numbers 57-71 in the periodic table and yttrium.

DESCRIPTION OF THE PREFERRED EMBODIMENTS

(1) Olefin block copolymer

The olefin block copolymer of the present invention comprises the following segment A:

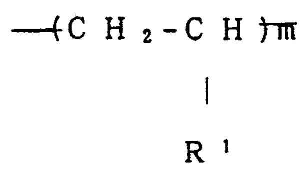

and the following segment B:

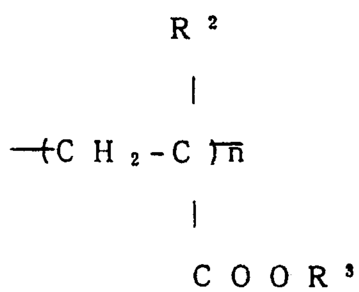

bonded in block fashion, wherein $R^1$ represents a hydrogen atom or an alkyl group of 1-12 carbon atoms, $R^2$ represents a hydrogen atom or an alkyl group of 1-6 carbon atoms, $R^3$ represents a hydrocarbon residue of 1-18 carbon atoms, m is an integer of 70 or more, and n is an integer of 50 or more.

The segment A comprises a repeating unit of $(CH_2\text{-}CHR^1)$ bonded in a straight-chain and is the polyolefin portion of said olefin block copolymer, wherein $R^1$ can be one or several kinds of the substituents mentioned above. The molecular weight of the segment A has an average degree of polymerization of m being 70 or more, preferably 200 or more. The molecular weight distribution of the segment A has a Q value (Mw/Mn) of 3.5 or less, preferably 3.0 or less. This molecular weight and molecular weight distribution can be determined by analysis of the polymer obtained through the first stage of polymerization.

The segment B comprises a repeating unit of $(CH_2\text{-}CR^2COOR^3)$ bonded in straight-chain and is the polyacrylate portion of said olefin block copolymer, wherein either $R^2$ or $R^3$ can be one or several kinds of the substituents mentioned above. As for $R^2$, a hydrogen or methyl group is preferable. As for $R^3$, there can be given a hydrocarbon residue, for example, methyl, ethyl, n-butyl, n-hexyl, n-octyl, n-dodecyl, i-propyl, t-butyl, 2-ethylhexyl, 2-norbonyl, dimethanooctahydronaphthyl, phenyl, benzyl and neophyl groups. The molecular weight of the segment B has an average degree of polymerization of n being 50 or more,

preferably 100 or more. The molecular weight distribution of the segment A has a Q value (Mw/Mn) of 4.0 or less, preferably 3.5 or less. This molecular weight and molecular weight distribution can be determined by extracting the resulting block copolymer with a solvent capable of dissolving polyacrylate, separating non-block polyacrylate, and the analysis thereof.

The block bonding between a polyolefin and polyacrylate portions can be confirmed by the following procedures.

(1) The non-block polyacrylate is separated by the extraction of the resulting polymer with a solvent capable of dissolving polyacrylate.

(2) Then the polyolefin-polyacrylate block copolymer and non-block polyolefin contained in the extraction residue of (1) are dissolved with a solvent capable of dissolving the polyolefin, and the block copolymer is then allowed to be adsorbed by a $SiO_2$ column for the separation of the non-block polyolefin. The adsorbed block copolymer can be obtained by the elution using a solvent, for example, xylene containing a 10 vol% of cyclohexanol.

The content of the polyacrylate portion of the polymer composition contained in the extraction residue of (1) is at least 1 wt%, preferably at least 3 wt%.

And the content of the polyacrylate portion of the block copolymer obtained in the procedure of (2) is at least 5 wt%, preferably 10 wt% or more.

(2) Process of preparing olefin block copolymer

The olefin block copolymer of the present invention can be produced by the polymerization of olefin monomers in the first stage and acrylate monomers in the second stage in the presence of a rare earth complex catalyst having the following constituents.

[Catalyst]

The catalyst used in the present invention is a rare earth complex catalyst comprising constituents A, B and C.

The constituent A is a substituted or unsubstituted cyclopentadienyl group. The cyclopentadienyl group is coordinated as an anion with the constituent C. It is preferable that two cyclopentadienyl groups are coordinated. In this case, at least preferably one of them is a condensed cyclopentadienyl group. A condensed cyclopentadienyl group means a group (ligand) comprising a ring structure due to the bonding of neighboring substituents in one ring of cyclopentadienyl group with each other. Specifically, there can be exemplified indenyl groups, phenanthryl groups, fluorenyl groups, bicyclo[3.3.0]octa-1,3-dienyl groups, 4,5,6,7-tetrahyroindenyl groups, bicyclo[5.3.0]deca-8, 11-dienyl groups, tricyclo[5.2.1.$0^{2,6}$]deca-2,5-dienyl groups, and alkyl, alkylsilyl, alkylgemyl substituents thereof. In particular, groups having indenyl, fluorenyl and a 4,5,6,7-tetrahydroindenyl skelton are preferable.

It is preferable that two cyclopentadienyl groups are bonded through hydrocarbon or silicon atom. Specifically, alkylene group of 1-4 main chain carbon atoms, alkyl group or aryl substituted alkylene group of 1-4 main chain carbon atoms, and dialkyl substituted silicon group can be given. Especially methylene group, ethylene group, propylene group and dimethylsilyl group are preferable.

The constituent B must have a substituent selected from the group consisting of a hydrogen atom, an alkyl group and an aryl group. As for an alkyl group, there are exemplified an alkyl group of 1-12, preferably, 1-8 carbon atoms, or an alkyl group having an alkyl (1-8 carbon atoms) substituted silicon group. As for an aryl group, there are exemplified an aryl group of 6-18, preferably, 6-12 carbon atoms, or an aryl group having an alkyl (1-8 carbon atoms) substituted silicon.

Among them, in particular, a sterically bulky substituent, for example, which comprises an alkyl group or an ortho-disubstituted aryl group having an alkyl group of 1-8 carbon atoms or an alkyl substituted silicon group, preferably a plurality of these groups at its alpha position or an ortho-disubstituted aryl group, also comprises a structure having less possibility of beta hydrogen or alkyl eliminations, for example a trialkylsilyl substituted methyl group and ortho-disubstituted aryl group are preferable. Specifically, bis-(trimethylsilyl)methyl group and a mesityl group can be given.

The constituent C must have a trivalent metal atom selected from the group consisting of the metals of the lanthanide series of atomic number 57-71 in the periodic table and yttrium. Among these metals, lanthanum, cerium, neodymium, dysprosium, lutetium and yttrium are preferable. A catalyst having the constituents A, B and C above can be specifically prepared using the following components a, b and c having the corresponding constituents respectively.

Component a which has the constituent A is an alkaline metal salt or an alkaline earth metal salt of a

compound bearing a cyclopentadienyl family of substituent. Among alkaline metals lithium and sodium are preferably employed and, among alkaline earth metals magnesium.

In addition, if a preferred component a is specifically shown, it is a compound represented by a general formula

$M_1^{\oplus} Cp^{\ominus}\text{-}Q\text{-}Cp'^{\ominus}M_2^{\oplus}$

wherein Q is an alkylene group of 1-4 main chain carbon atoms, an alkylene group of 1-4 main chain carbon atoms bearing aklyl group and an aryl group, or a silicon group bearing dialkyl or aryl groups, Cp is a cyclopentadienyl family of substituent, Cp' is a condensed ring cyclopentadienyl group, $M_1$ and $M_2$ are independently an alkaline metal or an alkaline earth metal respectively. In addition, when $M_1$ or $M_2$ is an alkaline earth metal, each of them necessarily comprises one halogen and one alkyl groups bonded.

As for specific examples, there can be exemplified
ethylenebis(indenyl)dilithium,
ethylenebis(indenyl)disodium,
ethylenebis(indenyl)dipotassium,
ethylenebis(indenyl)bis(chloro magnesium),
ethylenebis(indenyl)bis(bromo magnesium),
methylenebis(indenyl)dilithium,
1, 3-propylenebis(indenyl)dilithium,
2, 2-propylenebis(indenyl)dilithium,
dimethyl silylene bis(indenyl)dilithium,
ethylenebis(4,5,6,7-tetrahydroindenyl)dilithium,
ethylenebis(fluorenyl)dilithium, and
2, 2-propylene(cyclopentadienyl, fluorenyl)dilithium.

Component b having the constituent B is an alkaline metal or an alkaline earth metal compound bearing a substituent selected from the group consisting of an alkyl group and aryl group. When the component b bears hydrogen atoms as a substituent, said component b can be obtained by allowing the corresponding chemical compound having an alkyl group or aryl group to contact with hydrogen gas.

As for specific examples, there can be given methyllithium, methylpotassium, methylsodium, methylmagnesium chloride, methylmagnesium bromide, methylmagnesium iodide, ethyllithium, diethylmagnesium, n-butyllithium, sec-butyllithium, tert-butyllithium, isoprenyllithium, neopentyllithium, di-tert-butylmethyllithium, phenyllithium, o-tolyllithium, 2, 6-dimethylphenyllithium, mesityllithium, o-ethylphenyllithium, o-tert-butylphenyllithium,
o-trimethylsilylphenyllithium, benzyllithium, neophyllithium trimethylsilylmethyllithium and bistrimethylsilylmethyllithium. In particular, trialkylsilyl substituted methyl group such as bistrimethylsilylmethyllithium, and an alkaline metal salt or an alkaline earth metal salt of an ortho-disubstituted aryl group such as mesityllithium are preferable.

Component c having the constituent C is a trivalent metal halide selected from the group consisting of metals of atomic number 57-71 of the lanthanide series in the periodic table and yttrium. As for preferred embodiments of the component c, lanthanum trichloride, cerium trichloride, neodymium trichloride, gadolinium trichloride, dysprosium trichloride, lutetium trichloride and yttrim trichloride may be exemplified.

The catalyst used in the present invention may be synthesized by the use of publicly known techniques. For example, the chemical compound of the above component a is preferably allowed to stand in contact with the chemical compound of the component c in the presence of an ether series of organic solvent (5-1000 times amount of the solvent based on the weight of the component c) such as tetrahydrofran, diethyl ether and dimethoxyethane, in the temperature range from -200°C to 200°C and in a molar ratio calibrated by Cp of the component a to c ranging from 1.0 -2.5 to 1. Then the resulting product is allowed to react with the component b to produce the catalyst, wherein the solvent to be used (5-1000 times amount of solvent based on the weight of the component b) is an aliphatic hydrocarbon such as pentane, hexane and heptane, an alicylic hyrocarbon such as cyclohexane, an aromatic hydrocarbon such as benzene and toluene, or said ether series of organic solvent; the amount of the component b to be used is in the range from 0.5 to 2 relative to that of the component c, and the reaction temperature is in the range of -200°C to 200°C.

In the manufacture of the catalyst above, if an alkaline metal or an alkaline earth metal having an alkaly group or an aryl group is used as a component b, hydrogen gas can be used during or after the reaction of the component b.

As for the catalyst above according to the present invention, it can be solely used as an as-reacted

product for polymerization, or the catalyst can be deposited on a suitable carrier. As for the carrier to be used, there can be employed an inorganic substance such as silica gel, alumina, zeolite, magnesium chloride and magnesium oxide, and a polymer carrier such as polyethylene or polypropylene particles.

[Polymerization]

A monomer to be polymerized in the first stage using a rare earth ccmplex catalyst of the present invention is an olefin compound having a terminal double bond represented by the general formula:

$CH_2=CH-R^1$

wherein $R^1$ is a hydrogen atom or an alkyl group of 1-12 carbon atoms. Specifically there can be exemplified ethylene, propylene, l-butene, 3-methylbutene-l, l-hexene, 4-methylpentene-l, 1-octene and 1-decene. These monomers can be used alone or in combination of two or more kinds thereof.

As for the polymerization, any publicly known method such as gas phase, liquid phase or other methods can be employed. In using a solvent, it is desirable to use inert organic solvents, for example, an aromatic hydrocarbon such as benzene, toluene and xylene, and an alicyclic hydrocarbon such as cyclohexane and methylcyclopentane.

The polymerization temperature ranges from -100°C to 200°C, preferably from -20°C to 120°C. Although increased polymerization temperatures are effective in improving activities, they will decrease the yield of the block copolymer. In the polymerization, the coexistence of hydrogen gas can contribute to an improved activity, but it also decreases the yield of the block copolymer.

Pressure for polymerization is optionally selected from that in the range of normal pressure to $3000kg/cm^2G$.

The monomer to be polymerized at the second stage for obtaining the block copolymer of the present invention is an acrylate series compound having a general formula

$CH_2=C(R^2)COOR^3$

wherein $R^2$ is a hydrogen atom or an alkyl group of 1-6 carbon atoms, and $R^3$ is a hydrocarbon residue of 1-18 carbon atoms. Specifically there can be exemplified methyl acrylate, ethyl acrylate, propyl acrylate, n-butyl acrylate, t-butyl acrylate, phenyl acrylate, tolyl acrylate, triphenylmethyl acrylate, methyl methacrylate, ethyl methacrylate, isoproplyl methacrylate, n-butyl methacrylate, t-butyl methacrylate, benzyl methacrylate, 1,1-diphenyl methacrylate, tripheny
l methacrylate, methyl α -ethylacrylate, ethyl α -ethylacrylate and methyl α -proplyacrylate. These monomers can be used alone cr in combination of two or more kinds thereof.

As for the polymerization, any method publicly known can be employed as well as liquid phase polymerization. In using a solvent, it is desirable to use an inert organic solvent.

The polymerization temperature is in the range of from -150°C to 150°C, preferably from -80°C to 100°C.

[Examples]

Example-I

<u>Manufacture of Catalyst</u>

Into a 300 ml flask equipped with agitating blades, wherein the air has been fully replaced by nitrogen gas, were placed 7.75 mol of 1, 2-diindenylethane and purified 120 ml of THF. Then the mixture was cooled to -78°C and 9.7 ml of solution of 1.6 M n-butyllithium in hexane was dropped thereinto. Then the mixture was slowly heated to room temperature and refluxed for two hours.

Into this was introduced in one portion at 0°C a liquid comprising 2.2 g of anhydrous lutetium chloride dispersed previously in 100 ml of THF at -78°C, then the dispersion was refluxed for eight hours.

After the completion of the reaction, the reactant was cooled to 10°C and the solvent was distilled off in vacuo. After 100 ml purified diethyl ether was added thereto and agitated, the solvent was distilled off again in vacuo at 10°C. Such operation was repeated two times. To the obtained product was added 100 ml of purified toluene, and then 14.3 ml of a solution of 0.67M bis(trimethylsilyl)methyllithium in diethyl ether at 0°C. The mixture was then reacted for eight hours. The solvent was distilled off from the reaction mixture

from in vacuo at most 10°C. And then after addition of purified 100 ml of toluene, and agitation and extraction, the extract was filtered and the filtrate was concentrated and recrystallized to obtain a desired product.

The resulting rare earth complex catalyst was diluted with purified toluene to produce 0.025mmol-Lu/ml of catalyst solution in toluene for polymerization.

Polymerization

Into a one liter autoclave equipped with agitating blades, wherein the air has been fully replaced by $N_2$, and purified 300 ml of toluene was introduced, then under an atmosphere of $N_2$, 5.0 ml (0.125mmol) the catalyst solution produced above was added thereto and hydrogen was introduced into the polymerization vessel reached 2kg/cm$^2$ G, and the mixture was agitated for one hour at 15°C. Then, the hydrogen was purged and after replacing the atmosphere in the system with $N_2$, ethylene was introduced thereinto till the pressure in the polymerization vessel reached 6kg/cm$^2$ G, and then the first stage of polymerization was performed at 60°C for three hours at said pressure.

After the reaction ethylene was purged, and after replacing the atmosphere in the system with $N_2$ 30 ml methyl metacrylate was introduced thereinto, then the second stage of plymerization was conducted at 15°C for three hours.

After the completion of the reaction, 500 ml of methanol was added to the reaction mixture and the resulting mixture was filtered to produce 7.8 g of the desired polymer.

Analysis of polymer produced

A boiling chloroform Soxhlet extraction of the polymer obtained for four hours permitted 93.5% of the polymer to be recovered as an extraction residue. The extract was identified by IR analysis to be a homopolymer of methacrylate (hereinafter abbreviated as "PMMA")

It was determined by IR analysis that the polymer in the extraction residue was composed of polyethylene (hereinafter abbreviated as "HDPE") and PMMA. It was confirmed to contain 15.4 wt% of isotactic PMMA (mm faction: 0.83) according to the $^{13}$C-NMR thereof. The polymer, in addition, had a melting peak of 137.6°C (due to the HDPE) and a Tg of 41.6°C (caused by the isotactic PMMA). According to GPC, as for the molecular weight of the polyethylene portion in the first stage, which was otherwise polymerized separately for a control under the same conditions, the number average molecular weight (Mn), the weight average molecular weight (Mw) and the Q value (Mw/Mn) were 2.15 x $10^5$, 5.24 x $10^5$ and 2.44 respectively.

Among the polymers produced, the polymer in the chroloform extaction residue had a molecular weight calibrated by polyethylene standards comprising a Mn of 2.19 x $10^5$, a Mw of 6.37 x $10^5$ and a Q value of 2.90, and the PMMA extracted with chloroform had a molecular weight calibrated by polystyrene standards comprising a Mn of 7.79 x $10^4$, a Mw of 2.16 x $10^5$ and a Q value of 2.77.

Separately 100 mg of the polymer produced was dissolved into 50 ml of xylene at 120°C, then reprecipitated in 500 ml chloroform at room temperature to remove non block PMMA. The IR spectrum of the polymer after removal of non block PMMA was identical to that of the Soxhlet extraction residue. This means that the PMMA had bonded to the HDPE in block.

Separation of block copolymer

The block copolymer was separated from the polymer produced and analyzed according to the following procedures.

(1) Apparatus: GPC150C made by Waters company

(2) Column:

(a) $SiO_2$ column (140°C)

NOVA PAC SILICA Φ 3.9 x 75 mm made by Waters Company

(b) Polystyrene gel column (140°C)

AD80M/S 3 columns made by Showa Denko K.K.

(3) Flow rate: l.0 ml-ODCB/min.

(4) Detector: IR flow cell. To be detected at a wavelength of 3.42μ.

(5) Preparation of sample: 10.0 mg of sample was dissolved into 10 ml of ODCB, and 200μl thereof was introduced as a sample.

(6) Pre-experiment: A peak area of the detector is defined as I when the HDPE used separately for a

control experiment is introduced only into the column (b). When the same HDPE was introduced into the columns comprising (a) and (b) connected in the order of (a) to (b), the resulting peak area of the detector was 0.995. Therefore, no HDPE was adsorbed by $SIO_2$.

When PMMA (18224-9) made by the Aldrich Company was introduced into coloum (b) exclusively, the peak area of the detector was 0.II0. This means that detection sensitivity for PMMA was 0.110 that of polyethylene. In addition, when the PMMA was introduced into the columns comprising (a) and (b) connected in said order, no peak area was detected at all. It shows accordingly that the component containing PMMA was adsorbed by the silica gel.

(7) Data of samples

When the residue by Soxhlet extraction was introduced into column (b), the peak area of the detector was 0.88, and when the same sample was introduced into the columns comprising (a) and (b) connected in that order, the resulting peak area was 0.6I.

If the quantities of non block HDPE portion, blocked HDPE portion and blocked PMMA portion are A, B and C respectively, the following equations can be obtained:

$A + B + C = 1$ (total amount of polymers analyzed);

$A + B + 0.11C = 0.88$ (peak areas of polymers detected, when using the column (b) exclusively);

$A = 0.61$ (peak areas of polymers detected, when using the columns comprising (a) and (b) connected in that order;

The simultaneous equations give the results of $A = 0.61$, $B = 0.26$ and $C = 0.13$.

The C value of 13% gave relatively fair agreement with the PMMA content of 15.4 wt% obtained by said $^{13}C$-NMR.

It turned out from the results that 36 wt% of the total produced polymer amount, [(B + C)/(A + B + C) x ratio non- extraction of chloroform], was block copolymer, and the PMMA content of the block portion, [C/(B + C)], was 33 wt%. This means that 30 wt% of the polyethylene produced in the first polymerization stage, [(B/(A + B)], block-polymerizes with the PMMA produced in the second polymerization stage.

Example-2

1.9 g of polymer was obtained according to the same procedure as in Example-I except that the first stage polymerization was conducted at 40° C for 20 minutes.

The analysis results of the polymer produced according to the process described in Example-I are as follows;

* Polymer produced

percentage non-extraction of chloroform 66%

(chloroform insoluble fraction);

* Molecular weight of HDPE portion of polymers produced in the first stage

| | |
|---|---|
| Mn | $1.01 \times 10^5$ |
| Mw | $2.65 \times 10^5$ |
| Q value | 2.61; |

* Chloroform extraction residue of polymers produced (insolubles)

Content of isotactic PMMA 79.5 wt%

(mm fraction: 0.68)

Molecular weight calibrated by polyethlene standard

| | |
|---|---|
| Mn | $1.10 \times 10^5$ |
| Mw | $3.59 \times 10^5$ |
| Q value | 3.24 |

* PMMA portion of polymers produced in the second stage
  Molecular weight calibrated by polystyrene standard

| | |
|---|---|
| Mn | $6.54 \times 10^4$ |
| Mw | $1.95 \times 10^5$ |
| Q value | 2.98 |

As a result of the separation and analysis of the block copolymer according to the same process as in Example-I, 58 wt% of the polymer produced was block copolymer and the PMMA content of the block portion was 90 wt%, and this means that 42 wt% of the polyethylene produced in the first polymerization stage block-polymerizes with the PMMA produced in the second polymerization stage.

Example-3

7.2 g of polymers were obtained through polymerization as in Example-I except that the methylmethacrylate was polymerized for one hour in the second stage.

The results obtained by the analysis of the polymer produced according to the process described in Example-I were as follows:

* Polymer produced
  percentage non-extraction of chloroform 96.3%;
* Molecular weight of HDPE portion of the polymer produced in the first stage

| | |
|---|---|
| Mn | $2.15 \times 10^5$ |
| Mw | $5.24 \times 10^5$ |
| Q value | 2.44; |

* Chloroform extraction residue of the polymer produced

Content of isotactic PMMA 8.2 wt%
(nm fraction: 0.86)

Molecular weight calibrated by polyethylene standards

| | |
|---|---|
| Mn | $2.13 \times 10^5$ |
| Mw | $6.05 \times 10^5$ |
| Q value | 2.84; |

* PMMA portion of the polymers produced in the second stage
  Molecular weight calibrated by polystyrene standards

| | |
|---|---|
| Mn | $3.15 \times 10^4$ |
| Mw | $8.64 \times 10^4$ |
| Q value | 2.74 |

As a result of the separation and analysis of the block copolymer according to the same process as in Example-I, 32 wt% of the polymer produced was block copolymer and the PMMA content of the bock portion was 22 wt%. Accordingly, it can be said that 28 wt% of the polyethylene produced in the first polymerization stage undergoes block-polymerization with the PMMA produced in the second polymerization stage.

Example-4

7.2 g of the polymers were obtained due to polymerization as in Example-I except that the monomer used in the second stage was replaced by ethyl acrylate.

The results obtained by the analysis of the polymer produced according to the process described in Example-I were as follows:

* Polymer produced
Percentage non-extraction of chloroform 95.0%;

* The molecular weight of HDPE portion of the polymer produced at the first stage

| | |
|---|---|
| Mn | $2.15 \times 10^5$ |
| Mw | $5.24 \times 10^5$ |
| Q value | 2.44; |

* Chloroform extraction residue of the polymer produced

| | |
|---|---|
| Content of polyethylacrylate | 3.6 wt% |
| Melting point (melting peak by DSC) | 137.6°C |

Molecular weight calibrated by polyethylene standards

| | |
|---|---|
| Mn | $2.18 \times 10^5$ |
| Mw | $5.87 \times 10^5$ |
| Q value | 2.69; |

* Ethyl polyacrylate portion of the polymer produced at the second stage
Molecular weight calibrated by polystyrene standards

| | |
|---|---|
| Mn | $6.09 \times 10^4$ |
| Mw | $1.84 \times 10^5$ |
| Q value | 2.63 |

As a result of the separation and analysis of the block copolymer according to the same process as in Example-I, 16 wt% of the polymer produced was block copolymer and the polyethylacrylate content of the block portion was 24 wt%, which means that 14 wt% of the polyethylene produced in the first polymerization stage undergoes block-polymerization with the polyethylacrylate produced in the second polymerization stage.

Example-5

Manufacture of catalyst

The manufacture of the catalyst was conducted according to the process in Example-I except that 2-(cyclopetadienyl)-2-(fluorenyl)propane was employed in place of I.2-diindenylethane and all the synthetic scale was changed to 5 mmol. The concentration of rare earth complex obtained was 0.018 mmol-Lu/ml-toluene.

Polymerization

The results obtained by the analysis of the polymer produced according to the process described in Example-I except that the amount of catalyst used was changed to 5ml (0.090 mmol), were as follows:

* Polymer produced
  Percentage non-extraction of chloroform 84.7%;
* The molecular weight of HDPE portion of the polymers produced in the first stage

| | |
|---|---|
| Mn | $1.06 \times 10^5$ |
| Mw | $3.25 \times 10^5$ |
| Q value | 3.07; |

* Chloroform extraction residue of the polymer produced

| | |
|---|---|
| Content of syndiotatic PMMA | 20.1 wt% |
| | (rr fraction: 0.61) |
| Melting point (melting peak by DSC) | 136.3°C |

Molecular weight calibrated by polyethylene standards

| | |
|---|---|
| Mn | $1.32 \times 10^5$ |
| Mw | $4.32 \times 10^5$ |
| Q value | 3.28; |

* PMMA portion of the polymer produced in the second stage
  Molecular weight calibrated by polystylene standards

| | |
|---|---|
| Mn | $1.21 \times 10^5$ |
| Mw | $3.06 \times 10^5$ |

| | |
|---|---|
| Q value | 2.53; |

Example-6

Manufacture of catalyst

The present manufacture was conducted according to the process as in Example-I except that anhydrous yttrium chloride was employed in place of anhydrous lutetium chloride and all the synthesizing scale was changed to 10 mmol. The concentration of rare earth complex obtained was 0.063 mmol-Y/ml-toluene.

Polymerization

The polymerization was conducted according to the process as in Example I except that the amount of the catalyst used was changed to 2.0 ml (0.125 mmol). Then 30.2 g of the polymer was obtained.

The results obtained by the analysis of the polymer produced according to the process described in Example-I were as follows:

* Polymer produced
  Percentage non-extraction of chloroform 99.4%;
* The molecular weight of HDPE portion of the polymer produced in the first stage

| | |
|---|---|
| Mn | $7.84 \times 10^4$ |
| Mw | $2.15 \times 10^5$ |
| Q value | 2.74; |

* Chloroform extraction residue of the polymer produced

| | |
|---|---|
| Content of isotactic PMMA | 5.1 wt% |
| | (mm fraction: 0.69) |

Molecular weight calibrated by polyethylene standards

| | |
|---|---|
| Mn | $9.68 \times 10^4$ |
| Mw | $2.84 \times 10^5$ |
| Q value | 2.88; |

* PMMA portion of the polymer produced in the second stage
  Molecular weight calibrated by polystyrene standards

| | |
|---|---|
| Mn | $4.99 \times 10^4$ |
| Mw | $1.29 \times 10^5$ |
| Q value | 2.59; |

Example-7

Manufacture of catalyst

The persent manufacture was conducted according to the process as in Example-I except that anhydrous lanthanum chloride was employed in place of anhydrous lutetium chloride and I, 3-diindenyl propane was employed in place of I, 3-diindenylethane, and all the synthesizing scale was changed to 8.6 mmol. The concentration of rare earth complex obtained was 0.028 mmol-La/ml-toluene.

Polymerization

The polymerization was conducted according to the process as in Example-1 except that the amount of the catalyst used was changed to 3.5 ml (0.100 mml) and the polymerization time of the first stage was changed to one hour. Then 10.2 g of the polymer was obtained.

The results obtained by the analysis of the polymer produced according to the process described in Example-I were as follows:

* Polymer produced
  Percentage non-extraction of chloroform 93.9%;
* The molecular weight of HDPE portion of the polymer produced in the first stage

| | |
|---|---|
| Mn | $3.71 \times 10^4$ |
| Mw | $1.02 \times 10^5$ |
| Q value | 2.76; |

* Chloroform extraction residue of the polymer produced
  Contnet of isotactic PMMA 9.7 wt%
  Molecular weight calibrated by polyethylene standards

| | |
|---|---|
| Mn | $4.57 \times 10^4$ |
| Mw | $1.47 \times 10^5$ |
| Q value | 3.22; |

* PMMA portion of the polymer produced in the second stage
  Molecular weight calibrated by polystyrene standards

| | |
|---|---|
| Mn | $4.23 \times 10^4$ |
| Mw | $1.32 \times 105^4$ |
| Q value | 3.22; |

* PMMA portion of the polymer produced in the second stage
  Molecular weight calibrated by polystyrene standards

| | |
|---|---|
| Mn | $4.23 \times 10^4$ |
| Mw | $1.32 \times 10^5$ |
| Q value | 3.12; |

Example-8

Manufacture of catalyst

The present manufacture was conducted according to the process as in Example-6 except that dimethyl silylene bis (indene) was employed in place of I, 2-diindenylethane. The concentraation of rare earch complex obtained was 0.067 mmol-Y/ml-toluene.

Polymerization

The polymerization was conducted according to the process as in Example I except that the amount of the catalyst used was changed to 3ml (0.200 mmol). Then 18.5 g of the polymer was obtained.

The results obtained by the analysis of the polymer produced according to the process described in Example-I were as follows:

* Polymer produced
  Percentage non-extraction of chloroform 93.8%;
* The molecular weight of HDPE portion of the polymer produced in the first stage

| | |
|---|---|
| Mn | $1.53 \times 10^5$ |
| Mw | $4.42 \times 10^5$ |
| Q value | 2.88; |

* Chloroform extraction residue of the polymer produced

Content of isotactic PMMA 8.1 wt%
(mm fraction: 0.57)

Molecular weight calibrated by polyethylene standards

| | |
|---|---|
| Mn | $1.61 \times 10^5$ |
| Mw | $5.02 \times 10^5$ |
| Q value | 3.12; |

* PMMA portion of the polymer produced in the second stage
  Molecular weight calibrated by polystyrene standards

| | |
|---|---|
| Mn | $3.25 \times 10^4$ |
| Mw | $8.77 \times 10^4$ |
| Q value | 2.70 |

## Claims

1. An olefin block copolymer characterized in that said copolymer has the following segment A;

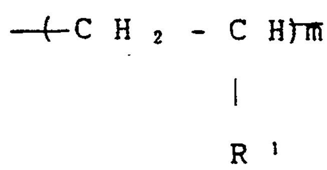

and the following segment B;

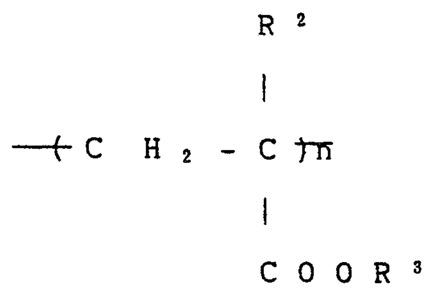

bonded in block, and the Q value of the segment A is 3.5 or less, the Q value of the segment B is 4.0 or less and the B segment is not less than 5 wt%, wherein $R^1$ represents a hydrogen atom or an alkyl group of 1-12 carbon atoms, $R^2$ represents a hydrogen atom or an alkyl group of 1-6 carbon atoms, $R^3$ represents a hydrocarbon residue of 1-18 carbon atoms, m is an integer 70 or more, and n is an integer of 50 or more.

2. A copolymer according to Claim 1 wherein the segment A has an average degree of polymerization (m) of at least 200 together with a Q value of at most 3.0 and the segment B has an average degree of polymerization (n) of at least 100 together with a Q value of at most 3.5.

3. A copolymer according to Claim I or Claim 2 wherein the segment A is a polyethylene and the segment B is a polyacrylic acid ester or a polymethacrylic acid ester.

4. A process for manufacturing an olefin block copolymer characterized in that in the presence of a catalyst comprising the following catalyst constituents A, B and C, a first polymerization stage is effected using an olefin having a general formula of $CH^2=CHR^1$ wherein $R^1$ is a hydrogen atom or an alkyl group of 1-12 carbon atoms, and a second polymerization stage is conducted using an olefin having a general formula of $CH_2=C(R^2)COOR^3$ wherein $R^2$ is a hydrogen atom or an alkyl group of 1-6 carbon atoms and $R^3$ is a hydrocarbon residue of 1-18 carbon atoms,
   the catalyst constituent A is a substituted or an unsubstituted cyclopentadienyl group,
   the catalyst constituent B is a substituent which is selected from the group consisting of a hydrogen atom, an alkyl and aryl groups, and
   the catalyst constituent C is a trivalent rare earth metal which is selected from the group consisting of a metal having an atomic number of 57-71 of the lanthanide series in the periodic table and yttrium.

**5.** A method according to Claim 4 wherein the olefin used in the first stage is ethylene and the olefin used in the second stage is acrylic acid ester or methacrylic acid ester.

**6.** A method according to Claim 4 or Claim 5 wherein the catalyst constituent A is a group selected from the group consisting of groups having indenyl, fluorenyl and 4, 5, 6, 7-tetrahydroindenyl skeltons; the catalyst constituent B is a group selected from the group consisting of a trialkylsilyl substituted methyl group or ortho-disubstituted aryl group; and the catalyst constituent C is a metal selected from the group consisting of lanthanum, cerium, neodymium, lutetium and yttrium.

**7.** A method according to Claim 6 wherein the catalyst comprising the catalyst constituents A, B and C is prepared from the following components a, b and c;

the component a having a general formula

$M_1{}^{\oplus}Cp^{\ominus}\text{-}Q\text{-}Cp'^{\ominus}M_2{}^{\oplus}$

wherein Q is an alkylene group of 1-4 main chain carbon atoms, an alkyl or aryl substituted aklylene group of 1-4 main chain carbon atoms or a dialkyl or aryl substituted silicon group, Cp is a cyclopantadienyl substituent, Cp' is a condensed ring cyclopentadienyl substituent, and $M_1$ and $M_2$ represent independently an alkaline metal or an alkaline earth metal, when $M_1$ or $M_2$ is an alkaline earth metal, each of which has one halogen or one alkyl group bonded;

the component b is an alkaline metal compound or an alkaline earth metal compound having substituents selected from the group consisting of an alkyl and an aryl group; and

the component c is a trivalent metallic halide selected from the group consisting of the metals of the lanthanide series of atomic number 57-71 in the periodic table and yttrium.

**8.** A method according to Claim 7 wherein the component a is a compound selected from the group consisting of an alkaline metal or an alkaline earth metal compound bearing a substituent selected from ethylenebis(indenyl), l,3-propylenebis-(indenyl),2,2-propylenebis(indenyl), ethylenebis(4,5,6,7-tetrahydroindenyl), 2-2-propylene(cyclopentadienyl, fluorenyl) and dimentyl silylene, the component b is bis(trimethylsilyl)methyllithium or mesityllithium, and the component c is a compound selected from the group consisting of lanthanum trichloride, cerium trichloride, neodymium trichloride, lutetium trichloride and yttrium trichloride.

**9.** A method according to any one of Claim 7 wherein the component a and the component c are allowed to contact each other in a molar ratio calibrated by Cp of 1.0-2.5:1 in the presence of an ether solvent, and the resulting product is allowed to react with the component b in a molar ratio of 0.5-2 against the component c to produce said catalyst.